# EUROPÄISCHE PATENTANMELDUNG

(11) **EP 4 616 981 A1**
(43) Veröffentlichungstag der Anmeldung: **17.09.2025**
(21) Anmeldenummer: 24162956.7
(22) Anmeldetag: 12.03.2024
(51) Int. Cl.: B23B 31/30, B33Y 80/00

(54) **DEHNBUCHSE FÜR EIN HYDRODEHNSPANNFUTTER**

(71) Anmelder: Gühring KG, 72458 Albstadt (DE)
(72) Erfinder: Steidle, Christian, 72459 Albstadt (DE)
(74) Vertreter: Winter, Brandl - Partnerschaft mbB

(57) **Zusammenfassung**

Beschrieben wird eine Dehnbuchse (30) zum abgedichteten Einsetzen in eine axiale Aufnahmeöffnung eines Grundkörpers eines Hydrodehnspannfutters. Die Dehnbuchse (30) hat einen sich entlang einer Längsmittelachse (A30) erstreckenden Buchsenkörper, der eine zentrale Spannbohrung (40) zum Aufnehmen und Spannen eines zylindrischen Schafts eines Zerspanungswerkzeugs aufweist. Außenumfangssseitig weist der Buchsenkörper im Bereich der Spannbohrung (40) eine Mantelfläche (44) auf, die einen radial elastisch verformbaren ringförmig umlaufenden Materialsteg (42) bildet und mit der Innenumfangsfläche der Aufnahmeöffnung eine Druckkammer begrenzt. Um Werkzeuge im großen Spektrum von Schaftdurchmessern, insbesondere auch mit sehr kleinen Schaftdurchmessern mit kontrollierbaren Drücken in der Druckkammer spannen zu können, sind im Buchsenkörper radial innerhalb der Mantelfläche (44) mehrere, sich entlang der Längsmittelachse (A30) erstreckende und, vorzugsweise gleichwinklig beabstandet, um die Spannbohrung (40) herum verteilte Ausnehmungen (50) ausgebildet sind, die gegenüber der Mantelfläche (44) und der Spannbohrung (40) geschlossen sind.

## Beschreibung

Die Erfindung betrifft eine Dehnbuchse zum abgedichteten Einsetzen in eine axiale Aufnahmeöffnung eines Grundkörpers eines Hydrodehnspannfutters, mit einem sich entlang einer Längsmittelachse erstreckenden Buchsenkörper, gemäß dem Oberbegriff des Anspruchs 1.

Derartige Dehnbuchsen sind in vielfacher Gestalt im Einsatz, um Schneidwerkzeuge mit kreiszylindrischem Spannschaft mit hoher Rundlaufgenauigkeit in einer Spannbohrung zu spannen. Der Buchsenkörper ist außenumfangsseitig im Bereich der Spannbohrung mit einem radial elastisch verformbaren ringförmig umlaufenden Materialsteg ausgestattet, dessen äußere Mantelfläche so gestaltet ist, dass sie im eingesetzten Zustand mit der Innenumfangsfläche der Aufnahmeöffnung eines Hydrodehnspannfutters eine geschlossenen Druckkammer vervollständigt bzw. ausbildet.

Zum Spannen von Werkzeugen mit kleinerem Schaftdurchmesser, beispielsweise bis in Bereiche von unter 6 mm, werden in die Spannbohrung des Buchsenkörpers sogenannte Zwischenbüchsen oder Reduzierhülsen oder -buchsen eingesetzt, die über den Umfang verteilt Längsschlitze haben, um ihnen die erforderliche Elastizität zur Übertragung der Spannkräfte zu geben.

In den Dokumenten DE 20 2011 004 231 U1, DE 20 2015 105 500 U1, DE 20 2012 104 969 U1 und DE 10 2011 106 421 B3 sind solche mit Zwischenbüchsen ausgestattete Dehnbuchsenanordnungen beschrieben. Es ist auch bekannt, z.B. aus den Dokumenten EP 1 529 584 B1 oder DE 10 2008 060 374 A1 solche Zwischenhülsen in Verbindung mit Schrumpffuttern zu verwenden.

Es zeigt sich jedoch, dass es bei kleinen Schaftdurchmessern oftmals schwierig ist, einen ausreichend hohen Reibschluss zwischen Reduzierhülse und Werkzeugschaft aufzubauen. In der Regel muss der Druck in den Druckkammern mit kleiner werdendem Schaftdurchmesser erheblich angehoben werden. Dies kann sich einerseits negativ auf die Lebensdauer der Dehnbuchse auswirken, und andererseits führen derartige Druckbeaufschlagungen dazu, dass mit der Zeit aufgrund der nicht mehr kontrollierbaren Verformung der Dehnbuchse die angestrebten Rundlaufgenauigkeiten nicht mehr erzielt werden können.

Der Erfindung liegt somit die Aufgabe zugrunde, eine in einen Grundkörper eines Hydrodehnspannfutters einsetzbare Dehnbuchse zu schaffen, mit der Werkzeuge für ein großes Schaftdurchmesserspektrum, insbesondere aber auch mit kleinem Schaftdurchmesser, zuverlässig gespannt werden können, ohne den Spanndruck selbst dann anheben zu müssen, wenn äußerst hohe Drehmomente zwischen Dehnbuchse und Werkzeugschaft übertragen werden müssen.

Diese Aufgabe wird mit einer Dehnbuchse mit den Merkmalen des Patentanspruchs 1 gelöst.

Eine erfindungsgemäße Dehnbuchse zum abgedichteten Einsetzen in eine axiale Aufnahmeöffnung eines Grundkörpers eines Hydrodehnspannfutters umfasst einen sich entlang einer Längsmittelachse erstreckenden Buchsenkörper, der eine zentrale Spannbohrung zum Aufnehmen und Spannen eines zylindrischen Schafts eines Zerspanungswerkzeugs aufweist, wobei der Buchsenkörper außenumfangsseitig im Längenbereich der Spannbohrung eine Mantelfläche aufweist, die einen radial elastisch verformbaren ringförmig umlaufenden Materialsteg bildet und die mit einer Innenumfangsfläche der Aufnahmeöffnung eine Druckkammer begrenzt. Mit anderen Worten bildet bei in die Aufnahmeöffnung des Grundkörpers eingesetztem Buchsenkörper die Mantelfläche des Buchsenkörpers mit der Innenumfangsfläche der Aufnahmeöffnung eine Druckkammer aus, die bis auf eine Druckfluidzufuhrstelle, die beispielsweise durch einen in die Druckkammer mündenden Stichkanal gebildet ist, geschlossen ist.

Erfindungsgemäß sind im Buchsenkörper radial innerhalb der Mantelfläche mehrere, sich entlang der Längsmittelachse erstreckende und, vorzugsweise gleichwinklig beabstandet, um die Spannbohrung herum verteilte Ausnehmungen ausgebildet, die gegenüber der Mantelfläche und der Spannbohrung geschlossen sind. Versuche haben gezeigt, dass es mit dieser Struktur des Buchsenkörpers, bei der ein Fügespalt zwischen Dehnbuchse und Zwischenhülse entfällt, gelingt, die radiale Verformung des Materialstegs gleichförmig und verlustfreier in eine zentrierte Einschnürung der Spannbohrung umzuwandeln, so dass die Dehnbuchse auf den in der Spannbohrung aufgenommenen Werkzeugschaft große Drehmomente übertragen kann, selbst wenn der Innendurchmesser der Spannbohrung klein und der Druck in der Druckkammer in Bereichen bleibt, die ausschließlich zu elastischen Verformungen der Dehnbuchsenstruktur führen. Die Ausnehmungen können dabei unterschiedlichste Querschnittsformen haben, und es ist auch nicht erforderlich, dass sie sich achsparallel zur Achse der Spannbohrung erstrecken.

Die erfindungsgemäße Dehnbuchse kann daher als eine kompakt aufgebaute Einheit anstelle einer eingangs diskutierten Dehnbuchsenanordnung aus einer Dehnbuchse und Zwischenbüchse in die axiale Aufnahmeöffnung eines Grundkörpers eines Hydrodehnspannfutters eingesetzt werden, was die Umrüstung des Hydrodehnspannfutters zur Spannung von Werkzeugen mit kleinem Schaftdurchmesser erheblich vereinfacht.

### Vorteilhafte Weiterbildungen sind Gegenstand der Unteransprüche.

Wenn der radial elastisch verformbare Materialsteg radial außenseitig zwei im Axialabstand zueinander stehende Ringnuten hat, die vorzugsweise nahe an den axialen Endabschnitten der Spannbohrung liegen, werden auf einfachste Weise zwei Dehnkammern geschaffen, und die elastische Verformbarkeit des Materialstegs wird vergleichmäßigt. Selbstverständlich kann der radial elastisch verformbare Materialsteg radial außenseitig auch mehr als zwei Ringnuten aufweisen, die über den Längenbereich der Spannbohrung in Abständen verteilt sind.

In Versuchen hat sich herausgestellt, dass die Verformung der Spannbohrung noch weiter vergleichmäßigt wird, wenn die Ausnehmungen durch einen umlaufenden Ringspalt miteinander verbunden sind. Der Ringspalt hat dabei vorteilhafterweise eine radiale Erstreckung im Bereich eines Bruchteils eines mm. Vorzugsweise ist dabei der Ringspalt so angeordnet, dass er die radial äußeren Endbereiche der Ausnehmungen verbindet.

Eine zusätzliche Vergleichmäßigung der radialen Verformung der Spannbohrung wird dann erzielt, wenn der Buchsenkörper innenumfangsseitig mehrere zur Spannbohrung hin offene und, vorzugsweise gleichwinklig beabstandet, um die Spannbohrung herum verteilte Kühl-/Schmiermittelschlitze hat, die sich über die gesamte Länge der Spannbohrung bzw. Spannhöhlung des Buchsenkörpers erstrecken.

Wenn die Kühl-/Schmiermittelschlitze in gleicher Anzahl wie die Ausnehmungen vorhanden und vorzugsweise winkelmäßig mittig versetzt zu den Ausnehmungen angeordnet sind, wird die Verteilung des übertragbaren Drehmoments über den Umfang weiter vergleichmäßigt.

Über ein radiales Überlappungsmaß von Ausnehmungen und Kühl-/Schmiermittelschlitzen kann die Elastizität der Struktur eine Feinabstimmung erhalten.

Um die Schwingungsneigung eines in einem Hydrodehnspannfutter mit Dehnbuchse gespannten Werkzeugs besser eingrenzen zu können, ist es von Vorteil, wenn ausgewählte Hohlräume der Dehnbuchse, zumindest aber die Ausnehmungen mit einem Dämpfungsmaterial gefüllt sind. Dieses Material kann darüber hinaus zur Feinauswuchtung der Dehnbuchse genutzt werden.

Die Ausnehmungen können unterschiedlichste Querschnittsformen haben, und müssen auch nicht abgeschlossen sein. Wenn sie allerdings von geschlossenen Kammern gebildet sind, kann ein stirnseitiger Bund, mit dem die Dehnbuchse am Hydrodehnspannfutter fixiert werden kann, mit höherer Festigkeit ausgeführt werden.

Das Verformungsverhalten der Struktur der Dehnbuchse kann in vorteilhafter Weise am einfachsten dadurch gesteuert werden, dass der Buchsenkörper durch Anwendung eines generativen Fertigungsverfahrens, wie z.B. eines 3D-Druck-Verfahrens, materialeinstückig ausgebildet wird. Dieses Herstellungsverfahren erlaubt es, die Kammern geschlossen zu fertigen, wobei sie herstellungstechnisch bedingt mit ungesintertem bzw. nicht verfestigtem, pulverförmigem Material gefüllt sind, wodurch sich positive Dämpfungseigenschaften ergeben.

Wenn der Buchsenkörper an seinem einen axialen Ende eine sich radial über die Mantelfläche hinaus erstreckenden Bund zur Anlage am Grundkörper des Hydrodehnspannfutters hat, kann dieser Bund in vorteilhafter Weise zur Abdichtung der Druckkammer herangezogen werden. Außerdem kann der Bund dazu genutzt werden, einen Kanal zur Versorgung der Druckkammer mit Hydraulikfluid zu verschließen.

Vorzugsweise ist die Anordnung dann so getroffen, dass der Bund eine Ringnut in der Mantelfläche begrenzt, wodurch Bauraum gespart wird.

Gute Ergebnisse hinsichtlich des mit der Dehnbuchse übertragbaren Drehmoments ergeben sich dann, wenn die in Richtung der Längsmittelachse gemessene Länge der Ausnehmungen im Bereich des 0,8 bis 0,9-fachen der Länge der Spannbohrung liegt.

Die Ausnehmungen können in axialer Richtung grundsätzlich durch kleine Stege unterbrochen sein. Wenn sie sich in axialer Richtung im Wesentlichen über die gesamte axiale Länge der Mantelfläche erstrecken, kann sich der Materialsteg im Bereich der Ausnehmungen im Wesentlichen über seine ganze Länge frei verformen, wodurch eine Vergleichmäßigung der Ringspannungen im Materialsteg erzielt wird.

In Versuchen konnte ferner gezeigt werden, dass die Verformungen der Dehnbuchsenstruktur insbesondere dann gut steuerbar sind, wenn die radiale Erstreckung der Ausnehmungen so gewählt wird, dass sie im Wesentlichen der halben Wandstärke des Materialstegs entspricht.

Grundsätzlich kann die Dehnbuchse zum Spannen von Werkzeugen mit großen Schaftdurchmessern von bis zu 32 mm eingesetzt werden. Besonders vorteilhaft ist sie dann einsetzbar, wenn der Innendurchmesser der Spannbohrung im Bereich zwischen 2,5 und 4,5 mm liegt.

Wie oben bereits angesprochen, lässt sich über den umlaufenden Ringspalt, der die Ausnehmungen miteinander verbindet, die Einschnürung der Spannbohrung vergleichmäßigen. Dabei zeigt sich, dass es hierzu bereits genügt, dem Ringspalt eine radiale Erstreckung zu geben, die im Bruchteilsbereich eines mm liegt.

Zur Herstellung eines Hydrodehnspannfutters wird die Dehnbuchse in eine axiale Aufnahmeöffnung des Grundkörpers mit einer definierten Fügepassung eingesetzt und mit dem Grundkörper zur Abdichtung der Druckkammer stoffschlüssig verbunden, beispielsweise verlötet.

Nachstehend werden anhand schematischer Zeichnungen Ausführungsbeispiele der Erfindung näher erläutert. Es zeigen:
Figur 1 eine Schnittansicht eines Hydrodehnspannfutters mit eingesetzter Dehnbuchse gemäß einer ersten Ausführungsform;
Figur 2 in vergrößerter Darstellung die Einzelheit "II" in Figur 1;
Figur 3 einen Längsschnitt gemäß "III-III" in Figur 4 der in dem Ausführungsbeispiel gemäß Figur 1 und 2 verwendeten Dehnbuchse;
Figur 4 eine Stirnansicht der Dehnbuchse gemäß Figur 3;
Figur 5 die Schnittansicht gemäß "V-V" in Figur 4;
Figur 6 die Ansicht des Schnitts "VI-VI" in Figur 5; und
Figur 7 eine der Figur 3 ähnliche Schnittansicht eines abgewandelten Ausführungsbeispiels der Dehnbuchse.

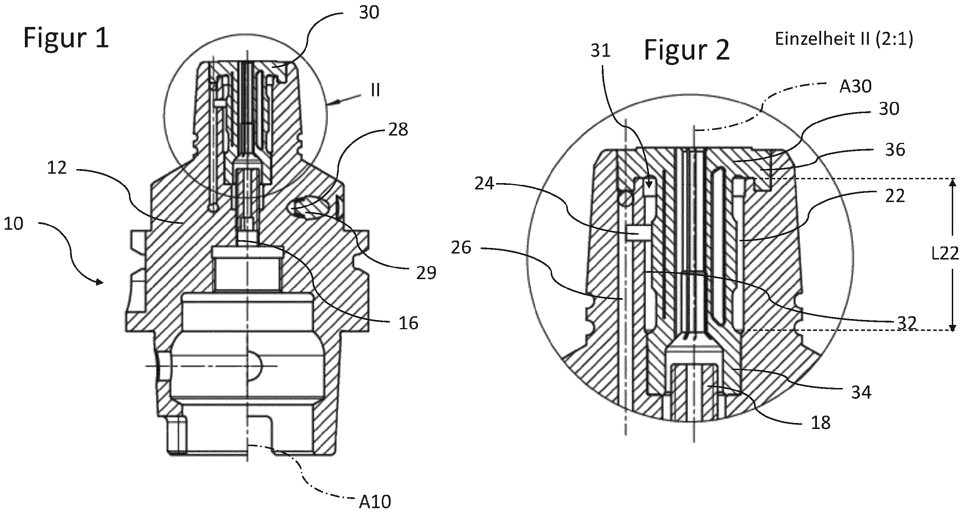

In Figur 1 ist mit dem Bezugszeichen 10 ein Hydrodehnspannfutter bezeichnet, das einen Grundkörper 12 hat, in den eine Dehnbuchse 30 mit der Mittelachse A30 eingesetzt ist. Das Hydrodehnspannfutter mit der Mittelachse A10 ist in dem gezeigten Ausführungsbeispiel mit einem Hohlschaftkegel (HSK) 14 ausgestattet, und für eine innenliegende Kühl-/Schmiermittel (KSM)-Versorgung ausgelegt. Hierzu ist in eine Zentralbohrung 16 des Grundkörpers 12 eine KSM-Hülse 18 eingeschraubt, die in die Dehnbuchse 30 ragt. Es sei an dieser Stelle darauf hingewiesen, dass der Hohlschaftkegel 14 nicht entscheidend ist und das Hydrodehnspannfutter anstelle des Hohlschaftkegels 14 einen anderen Spannschaft, beispielsweise einen Zylinderschaft oder Steilkegelschaft, haben kann. Des Weiteren sei darauf hingewiesen, dass es für die Erfindung nicht auf eine innenliegende Kühl-/Schmiermittelversorgung ankommt.

Der Grundkörper 12 des Hydrodehnspannfutters 10 hat für die Dehnbuchse 30 eine Aufnahmeöffnung 31 mit einer Innenoberfläche 32, die so ausgebildet ist, dass sie im Zusammenwirken mit der Mantelfläche 44 der eingesetzten Dehnbuchse 30 eine geschlossene, mit Druckfluid gefüllte Druckkammer 22 der Länge L22 begrenzt. Diese Druckkammer 22 ist über einen radialen Stichkanal 24 an einen axialen Druckfluid-Versorgungskanal 26 angeschlossen, über den Druckfluid aus einer einen Stellkolben 29 aufnehmenden Druckerzeugungskammer 28 in die Druckkammer 22 eingespeist werden kann.

Die Dehnbuchse 30 ist in die Aufnahmeöffnung 32 zentriert und abgedichtet in der Weise eingesetzt, dass nicht nur die Druckkammer 22, sondern auch die Bohrung des axialen Druckfluid-Versorgungskanals 26 verschlossen wird. Im axial innenliegenden Bereich hat die Dehnbuchse 30 einen ersten Füge-Zylinderabschnitt 34, und auf der Stirnseite einen zweiten Füge-Zylinderabschnitt 36 in der Ausgestaltung als Radialbund, der mit dem Grundkörper 12 des Hydrodehnspannfutters 10 zur Abdichtung der Druckkammer stoffschlüssig verbunden, beispielsweise verlötet ist. Eine entsprechende Verbindung zwischen Dehnbuchse 30 und Grundkörper 12 kann im Bereich des ersten Füge-Zylinderabschnitts 34 gewählt werden. Die Füge-Zylinderabschnitte 34 und 36, über die die Verlötung mit dem Grundkörper 12 des Hydrodehnspannfutters erfolgt, sind mit hoher Rundlaufpräzision bearbeitet. Die Passungen und Toleranzvorgaben sind so gewählt, dass die Achsen A10 und A30 im montierten Zustand der Dehnbuchse 30 möglichst genau fluchten, damit die Werkzeugspannung mit größtmöglicher Rundlaufgenauigkeit sichergestellt wird.

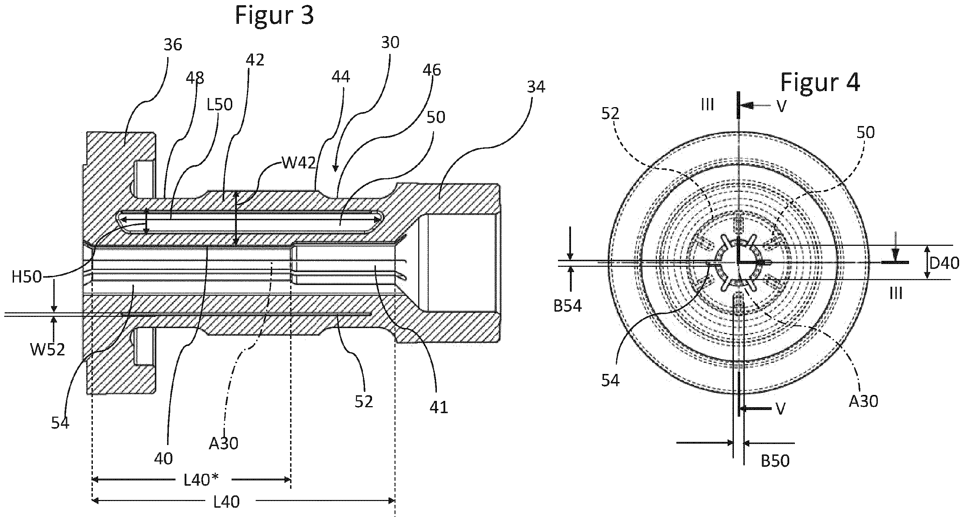

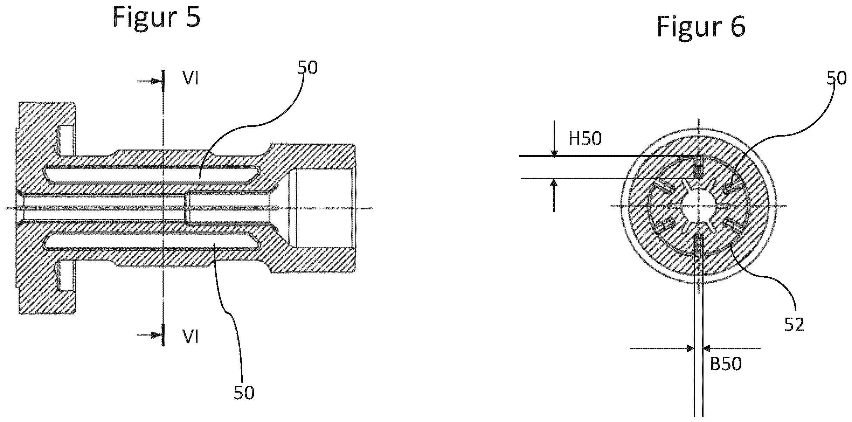

Nachfolgend wird unter Bezug auf die Figuren 2 bis 5 die Struktur der Dehnbuchse 30 näher beschrieben:
Die Dehnbuchse 30 hat einen Buchsenkörper mit drei Abschnitten. Zwischen den Füge-Zylinderabschnitten 34 und 36 liegt ein im Wesentlichen kreiszylindrischer, radial elastisch verformbarer und ringförmig umlaufender Materialsteg 42, dessen radial außenliegende Mantelfläche 44 die Druckkammer 22 begrenzt, wenn die Dehnbuchse 30 in den Grundkörper 12 des Hydrodehnspannfutters 10 fluiddicht eingesetzt ist. Der Materialsteg 42 bildet innenseitig eine kreiszylindrische Spannbohrung bzw. Spannhöhlung 40 für die Aufnahme und zum Spannen eines Werkzeugschafts aus. Im Folgenden wird diese zentrische Spannhöhlung durchgehend als Spannbohrung bezeichnet, auch wenn sie nicht als Bohrung gefertigt ist. Die axiale Länge der Spannbohrung 40 ist mit L40 bezeichnet und sie entspricht im Wesentlichen der Länge L22 der Druckkammer 22. Der Durchmesser der Spannbohrung ist in Figur 4 mit D40 bezeichnet.

Man erkennt aus der Figur 3, dass die Spannbohrung 40 in dem gezeigten Ausführungsbeispiel an ihrem dem Füge-Zylinderabschnitt 34 zugewandten Endbereich 41 im Innendurchmesser etwas erweitert ist, so dass sich eine gegenüber dem Maß L40 verkürzte, effektive Spannlänge L40* ergibt. Die Verkürzung zum Maß L40* wird größer gewählt, je kleiner der Schaftdurchmesser der zu spannenden Werkzeuge ist. Diese Erweiterung der Spannbohrung 40 ist aber kein zwingend notwendiges Merkmal, so dass der Innendurchmesser der Spannbohrung 40 auch über die ganze Länge L40 der Spannbohrung 40 gleich sein könnte, wodurch die effektive Spannlänge L40* gleich der Länge L40 wäre.

In der Mantelfläche 44 ist angrenzend an die Füge-Zylinderabschnitte 34 und 35 jeweils eine Ringnut 46 bzw. 48 ausgebildet. Die axial im Abstand zueinander liegenden Ringnuten 46, 48 liegen somit nahe an den axialen Endabschnitten der Spannbohrung 40 und sie bilden im eingesetzten Zustand der Dehnbuchse 30 - wie in Figur 1 und 2 erkennbar - radiale Verbreiterungen der Druckkammer 22 aus und schwächen die Wandstärke W42 des Materialstegs 42 an den axialen Endbereichen, wodurch die Nachgiebigkeit des Materialstegs 42 bei Druckbeaufschlagung der Druckkammer 22 erhöht und gleichzeitig die Steifigkeit des Materialstegs 44 in seinem Mittelabschnitt angehoben wird. Im dargestellten Ausführungsbeispiel erstreckt sich die Ringnut 48 in den Bereich des Füge-Zylinderabschnitts 3, der als die Mantelfläche 44 radial überragender Bund ausgebildet ist.

Zur Steuerung der radialen Einschnürung der Spannbohrung 40 bei Beaufschlagung der Druckkammer 22 mit Druckfluid sind im Materialsteg 42 im Wesentlichen mittig radial innerhalb der Mantelfläche 44 mehrere, sich entlang der Längsmittelachse A30 erstreckende und, vorzugsweise gleichwinklig beabstandet, um die Spannbohrung 40 herum verteilte Ausnehmungen 50 ausgebildet, die gegenüber der Mantelfläche 44 und der Spannbohrung 40 geschlossen sind. Im gezeigten Ausführungsbeispiel sind - wie aus Figur 4 bis 6 ersichtlich sechs solcher Kammern 50 vorgesehen, die im Winkelabstand von 60° zueinander angeordnet sind und eine Höhe H50, eine axiale Länge L50 und eine Breite B50 haben.

Die Ausnehmungen in der Ausgestaltung von geschlossenen Kammern 50 sind durch einen schmalen, umlaufenden Ringspalt 52 miteinander verbunden, wobei der Ringspalt 52 die radial äußeren Endbereiche der Ausnehmungen 50 verbindet. Die radiale Weite W52 des Ringspalts 52 liegt im Bruchteilsbereich eines Millimeters, beispielsweise zwischen 0,1 und 0,3 mm.

Im mittigen Winkelversatz zu den Ausnehmungen 50 hat der Buchsenkörper innenumfangsseitig mehrere zur Spannbohrung 40 hin offene und um die Spannbohrung herum verteilte, regelmäßig schmale Kühl-/Schmiermittelschlitze 54, die sich über die gesamte Länge des Buchsenkörpers erstrecken, so dass Kühl-/Schmiermittel (KSM) entlang des eingespannten Werkzeugschafts durch die Dehnbuchse 30 zu den Werkzeugschneiden strömen kann. Gleichzeitig kann durch die Dimensionierung und Lage dieser Kühl-/Schmiermittelschlitze 54 die radiale Nachgiebigkeit des Materialstegs 42 beeinflusst bzw. auf die durch die Ausnehmungen 50 vorgegebene Verformungscharakteristik der Dehnbuchse 30 abgestimmt werden.

Auch die Breite B54 der Kühl-/Schmiermittelschlitze 54 liegt regelmäßig im Millimeterbereich. Bei einem Innendurchmesser der Spannbohrung 40 von 3mm, liegt das Maß B54 in Bereichen von 0,3 bis 0,4 mm.

Die Kühl-/Schmiermittelschlitze 54 und die Ausnehmungen 50 sind im gezeigten Ausführungsbeispiel radial so weit nach außen bzw. innen gezogen, dass sie einander in radialer Richtung geringfügig überlappen.

Im gezeigten Ausführungsbeispiel sind die Ausnehmungen 50 als Hohlräume ausgestaltet. Es hat sich in Versuchen gezeigt, dass sich die Schwingungsneigung eines in das Hydrodehnspannfutter eingespannten Werkzeugs wirksam eingrenzen lässt, wenn die Ausnehmungen 50 mit einem Dämpfungsmaterial gefüllt sind. Diese Füllung kann am einfachsten dadurch ausgebildet werden, dass der Buchsenkörper der Dehnbuchse 30 durch Anwendung eines generativen Fertigungsverfahrens, wie z.B. eines 3D-Druck-Verfahrens, materialeinstückig ausgebildet wird. In diesem Fall sind die Ausnehmungen 50 in der Ausgestaltung als geschlossene mit nicht verfestigten, aufgeschmolzenen bzw. gesintertem, pulverförmigem Material gefüllt. Dabei bleibt auch der Ringspalt 52 mit pulverförmigem Material gefüllt.

In Versuchen haben sich folgende Abmessungen als besonders vorteilhaft herausgestellt:
Die in Richtung der Längsmittelachse gemessene Länge L50 der Ausnehmungen 50 sollte im Bereich des 0,8 bis 0,9-fachen der Länge L40 der Spannbohrung 40 liegen.
Vorzugsweise sollten sich die Ausnehmungen 50 in axialer Richtung im Wesentlichen über die gesamte axiale Länge der Mantelfläche 44 erstrecken.
Die radiale Erstreckung H50 der Ausnehmungen 50 sollte im Wesentlichen der halben Wandstärke W42 der Dehnbuchse 30, d.h. des Materialstegs 42 entsprechen.
Die vorstehend beschriebene Dehnbuchse 30 kann zum Spannen von Werkzeugschäften mit breitem Durchmesserspektrum eingesetzt werden. Besondere Vorteile gegenüber Hydrodehnspannfuttern, die mit Zwischenhülsen arbeiten, ergeben sich dann, wenn Werkzeuge mit sehr kleinen Schaftdurchmessern, beispielsweise von unter 6mm bis hinunter zu 2,5 mm gespannt werden. Im Folgenden werden für ein derartiges Hydrodehnspannfutter beispielhafte Abmessungen angegeben.
Die Dehnbuchse 30 mit einem Innendurchmesser D40 der Spannbohrung 40 von 2,75 mm hat einen Außendurchmesser des Materialstegs 44 von 11 mm. Die Wandstärke W42 des Materialstegs 42 liegt somit im Bereich von 4mm, im Bereich der Ringnuten bei 3,55 mm. Die Gesamtlänge der Dehnbuchse 30 beträgt etwa 30 mm, die axiale Länge des radial elastisch verformbaren Materialstegs und damit die axiale Erstreckung L50 der sechs über den Umfang gleichmäßig verteilten Ausnehmungen bzw. Kammern 50 liegt bei etwa 20 mm, deren Höhe H50 bei etwa 1,75 mm. Die Breite B50 der Ausnehmungen 50 beträgt etwa 1,5 mm. Die Länge L40 der Spannbohrung 40 liegt dann bei etwa 24 mm, die effektive Spannlänge L40* bei etwa 17 mm. Die zu den Ausnehmungen 50 um 30° winkelversetzten Kühl-/Schmiermittelschlitze 54 haben eine Breite B54 von 0,75 mm und eine radiale Erstreckung von etwa 1 mm. Der Ringspalt 52 wurde mit einer Weite W52 von 0,18 mm ausgeführt.

Bei der generativen Fertigung der Dehnbuchse hat sich herausgestellt, dass sich vorteilhafte Ergebnisse mit der Verwendung von Stahlpulvern erzielen lassen, deren Partikelgröße im Bereich zwischen 30 und 60 µm, beispielsweise bei 50 µm liegt. Um die Lötverbindung mit dem Grundkörper 12 des Hydrodehnspannfutters 10 dauerhaft und hoch belastbar zu halten, ist es von Vorteil, das Stahlpulver aus demselben Material wie dasjenige des Grundkörpers 12 des Hydrodehnspannfutters 10 zu gewinnen. Gute Ergebnisse hinsichtlich Elastizität und Dauerfestigkeit konnten mit Pulvern mit Partikelgrößen von 30µm und 50 µm aus dem Warmarbeitsstahl X37CrMoV5-1 (Werkstoff-Nr. 1.2342) erzielt werden. Dieser Werkstoff wurde nach geeigneter Wärmebehandlung durch ein Spannungsarmglühen auf Präzision bearbeitet und mittels einer Hochtemperaturlötung im Vakuum in den Grundkörper des Hydrodehnspannfutters eingesetzt. Schließlich wurden ausgewählte Funktionsflächen der Dehnbuchse einer Härtung unterzogen und erneut spannungsarm geglüht.

In Versuchen mit einem Schaftdurchmesser von 4 mm konnte bestätigt werden, dass sich mit einem Hydrodehnspannfutter, das mit einer Dehnbuchse der oben beschriebenen Dehnbuchsenstruktur bestückt war, Drehmomente von 7,5Nm bei Rundlaufgenauigkeiten im Bereich von 0,002 bis 0,004 mm realisieren lassen.

Selbstverständlich sind Abweichungen vom beschriebenen Ausführungsbeispiel möglich, ohne den Grundgedanken der Erfindung zu verlassen.

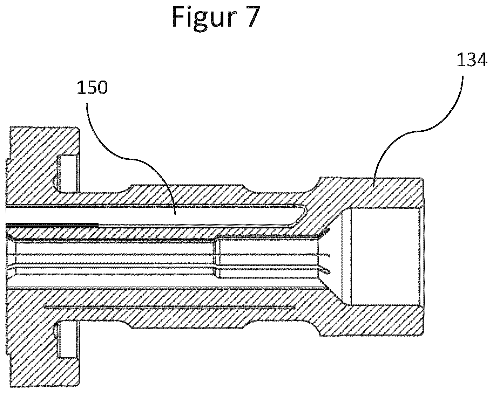

So können die Ausnehmungen eine vom gezeigten Rechteckquerschnitt abweichenden Querschnitt aufweisen. Sie können auch zumindest einen radialen Steg haben, wobei der Steg die Kammern in axial hintereinander liegende Teilkammern unterteilen kann. Außerdem müssen die Ausnehmungen 50 auch nicht geschlossen sein. Figur 7 zeigt eine Variante, die hinsichtlich der Struktur mit der Ausführung gemäß Figur 3 nahezu identisch ist, bei der aber die Ausnehmungen 150 nur auf der dem Füge-Zylinderabschnitt 134 zugewandten Seite geschlossen sind. Die Ausnehmungen können auch mit einem Dämpfungsmaterial gefüllt sein.

Abweichend von dem oben beschriebenen Ausführungsbeispiel, können die Ausnehmungen auch wendelförmig verlaufen, zumindest abschnittsweise.

Abweichend von dem oben beschriebenen Ausführungsbeispiel können die Ausnehmungen 50 und/oder der Ringspalt 52 leer sein, d.h. nicht mit pulverförmigem Material gefüllt sein.

Die Erfindung schafft somit eine Dehnbuchse zum abgedichteten Einsetzen in eine axiale Aufnahmeöffnung eines Grundkörpers eines Hydrodehnspannfutters. Die Dehnbuchse hat einen sich entlang einer Längsmittelachse erstreckenden Buchsenkörper, der eine zentrale Spannbohrung zum Aufnehmen und Spannen eines zylindrischen Schafts eines Zerspanungswerkzeugs aufweist. Außenumfangsseitig weist der Buchsenkörper im Bereich der Spannbohrung eine Mantelfläche auf, die einen radial elastisch verformbaren ringförmig umlaufenden Materialsteg bildet und mit einer Innenumfangsfläche der Aufnahmeöffnung eine Druckkammer begrenzt. Um Werkzeuge im großen Spektrum von Schaftdurchmessern, insbesondere auch mit sehr kleinen Schaftdurchmessern mit kontrollierbaren Drücken in der Druckkammer spannen zu können, sind im Buchsenkörper radial innerhalb der Mantelfläche mehrere, sich entlang der Längsmittelachse erstreckende und, vorzugsweise gleichwinklig beabstandet, um die Spannbohrung herum verteilte Ausnehmungen ausgebildet sind, die gegenüber der Mantelfläche und der Spannbohrung geschlossen sind.

## Patentansprüche

1. Dehnbuchse (30) zum abgedichteten Einsetzen in eine axiale Aufnahmeöffnung (31) eines Grundkörpers (12) eines Hydrodehnspannfutters (10), mit einem sich entlang einer Längsmittelachse (A30) erstreckenden Buchsenkörper, der eine zentrale Spannbohrung (40) zum Aufnehmen und Spannen eines zylindrischen Schafts eines Zerspanungswerkzeugs aufweist, wobei der Buchsenkörper außenumfangsseitig im Längenbereich der Spannbohrung (40) eine Mantelfläche (44) aufweist, die einen radial elastisch verformbaren ringförmig umlaufenden Materialsteg (42) bildet und die mit einer Innenumfangsfläche (32) der Aufnahmeöffnung (31) eine Druckkammer (22) begrenzt, **dadurch gekennzeichnet, dass**
im Buchsenkörper radial innerhalb der Mantelfläche (44) mehrere, sich entlang der Längsmittelachse (A30) erstreckende und, vorzugsweise gleichwinklig beabstandet, um die Spannbohrung (40) herum verteilte Ausnehmungen (50; 150) ausgebildet sind, die gegenüber der Mantelfläche (44) und der Spannbohrung (40) geschlossen sind.

2. Dehnbuchse (30) nach Anspruch 1, **dadurch gekennzeichnet, dass** der Materialsteg (44) radial außenseitig zwei im Axialabstand zueinander stehende Ringnuten (46, 48) hat, die vorzugsweise nahe an den axialen Endabschnitten der Spannbohrung (40) liegen.

3. Dehnbuchse (30) nach Anspruch 1 oder 2, **dadurch gekennzeichnet, dass** die Ausnehmungen (50; 150) durch einen umlaufenden Ringspalt (52) miteinander verbunden sind, wobei der Ringspalt (52) vorzugsweise die radial äußeren Endbereiche der Ausnehmungen (50; 150) verbindet.

4. Dehnbuchse (30) nach einem der Ansprüche 1 bis 3, **dadurch gekennzeichnet, dass** der Buchsenkörper innenumfangsseitig mehrere zur Spannbohrung (40) hin offene und, vorzugsweise gleichwinklig beabstandet, um die Spannbohrung (40) herum verteilte Kühl-/Schmiermittelschlitze (54) hat, die sich über die gesamte Länge der Spannbohrung (40) erstrecken.

5. Dehnbuchse (30) nach Anspruch 4, **dadurch gekennzeichnet, dass** die Kühl-/Schmiermittelschlitze (54) in gleicher Anzahl wie die Ausnehmungen (50; 150) vorhanden und vorzugsweise winkelmäßig mittig versetzt zu den Ausnehmungen (50; 150) angeordnet sind.

6. Dehnbuchse (30) nach Anspruch 5, **dadurch gekennzeichnet, dass** sich die Ausnehmungen (50; 150) in radialer Richtung so weit radial nach innen erstrecken, dass sie radial mit den Kühl-/Schmiermittelschlitzen (54) überlappen.

7. Dehnbuchse (30) nach einem der vorhergehenden Ansprüche, **dadurch gekennzeichnet, dass** die Ausnehmungen (50; 150) mit einem Dämpfungsmaterial gefüllt sind.

8. Dehnbuchse (30) nach einem der Ansprüche 1 bis 7, **dadurch gekennzeichnet, dass** die Ausnehmungen von geschlossenen Kammern (50) gebildet sind und/oder durch Radialstege von mehreren axial hintereinander liegenden Teilkammern gebildet sind.

9. Dehnbuchse (30) nach einem der vorhergehenden Ansprüche, **dadurch gekennzeichnet, dass** der Buchsenkörper an seinem einen axialen Ende eine sich radial über die Mantelfläche (44) hinaus erstreckenden Bund (36) zur Anlage am Grundkörper (12) des Hydrodehnspannfutters (10) hat.

10. Dehnbuchse (30) nach Anspruch 9, **dadurch gekennzeichnet, dass** der Bund (36) eine Ringnut (48) in der Mantelfläche (44) begrenzt.

11. Dehnbuchse (30) nach einem der Ansprüche 1 bis 10, **dadurch gekennzeichnet, dass** die in Richtung der Längsmittelachse gemessene Länge (L50) der Ausnehmungen (50; 150) im Bereich des 0,8 bis 0,9-fachen der Länge (L40) der Spannbohrung (40) liegt.

12. Dehnbuchse (30) nach Anspruch 11, **dadurch gekennzeichnet, dass** die Spannbohrung (40) einen axial innenliegenden Endabschnitt (41) mit erweitertem Innendurchmesser (D41) hat, wodurch sich eine gegenüber der Länge (L40) der Spannbohrung (40) reduzierte effektive Spannlänge (L40*) ergibt, die umso kleiner ist, je kleiner der Durchmesser (D40) der Spannbohrung (40) ist.

13. Dehnbuchse (30) nach einem der Ansprüche 1 bis 12, **dadurch gekennzeichnet, dass** sich die Ausnehmungen (50; 150) in axialer Richtung im Wesentlichen über die gesamte axiale Länge der Mantelfläche (44) erstrecken.

14. Dehnbuchse (30) nach einem der Ansprüche 1 bis 13, **dadurch gekennzeichnet, dass** die radiale Erstreckung (H50) der Ausnehmungen (50; 150) der halben Wandstärke (W42) des Materialstegs (42) entspricht.

15. Hydrodehnspannfutter (10) mit einem sich entlang einer Längsmittelachse (A10) erstreckenden Grundkörper (12) und einer in einer axialen Aufnahmeöffnung (31) im Grundkörper (12) mit einer definierten Fügepassung eingesetzten Dehnbuchse (30) nach einem der vorhergehenden Ansprüche.
